# EUROPÄISCHE PATENTANMELDUNG

(11) **EP 2 295 185 A2**
(43) Veröffentlichungstag der Anmeldung: **16.03.2011**
(21) Anmeldenummer: 10176146.8
(22) Anmeldetag: 10.09.2010
(51) Int. Cl.: B23K 9/28

(54) **Elektrodenkartusche und Verfahren zur Befestigung einer Elektrode an einem Schweißbrenner**

(30) Priorität: 10.09.2009 DE 102009040708
(71) Anmelder: TBI Industries GmbH, 35463 Fernwald-Steinbach (DE)
(72) Erfinder: Binzel, Oliver, 4132 Muttenz (CH)
(74) Vertreter: Tappe, Hartmut

(57) **Zusammenfassung**

Die Erfindung betrifft eine Elektrodenkartusche (12) für einen Schweißbrenner (10) sowie ein Verfahren zum Befestigen einer Elektrode an einem Schweißbrenner, insbesondere für das Lichtbogen-Schutzgasschweißen mit einer nicht abschmelzenden Elektrode, wobei der Schweißbrenner aus einer Brennerrohreinrichtung (11) und der Elektrodenkartusche gebildet ist, wobei die Elektrodenkartusche aus einer Spannhülseneinrichtung und einer Spanneinrichtung gebildet ist, und wobei die Elektrodenkartusche so ausgebildet ist, dass eine Elektrode (13) in die Spannhülseneinrichtung einsetzbar und an einem ersten Spannbereich (41) der Spannhülseneinrichtung fest fixierbar ist, wobei die Elektrode durch ein Verspannen der Spannhülseneinrichtung zwischen der Spanneinrichtung und der Brennerrohreinrichtung fixierbar ist, wobei die Spanneinrichtung ein erstes und ein zweites Spannelement aufweist, wobei die Spannhülseneinrichtung einen, vom ersten Spannbereich unabhängig ausgebildeten zweiten Spannbereich (31) aufweist, an dem die Elektrode fest fixierbar ist, wobei die Elektrode durch ein Verspannen der Spannhülseneinrichtung zwischen dem ersten und dem zweiten Spannelement fixierbar ist.

## Beschreibung

Die Erfindung betrifft eine Elektrodenkartusche für einen Schweißbrenner sowie ein Verfahren zum Befestigen einer Elektrode an einem Schweißbrenner, insbesondere für das Lichtbogen-Schutzgasschweißen mit einer nicht abschmelzenden Elektrode, wobei der Schweißbrenner aus einer Brennerrohreinrichtung und der Elektrodenkartusche gebildet ist, wobei die Elektrodenkartusche aus einer Spannhülseneinrichtung und einer Spanneinrichtung gebildet ist, und wobei die Elektrodenkartusche so ausgebildet ist, dass eine Elektrode in die Spannhülseneinrichtung einsetzbar und an einem ersten Spannbereich der Spannhülseneinrichtung fest fixierbar ist, wobei die Elektrode durch ein Verspannen der Spannhülseneinrichtung zwischen der Spanneinrichtung und der Brennerrohreinrichtung fixierbar ist.

Beim beispielsweise Wolfram-Inertgas-Schweißen (WIG-Schweißen) wird eine nicht abschmelzende Elektrode verwendet, die in einen Schweißbrenner eingesetzt ist. Zwischen der regelmäßig aus Wolfram bestehenden Elektrode und einem zu schweißenden Werkstück, wird beim Schweißvorgang ein Lichtbogen ausgebildet, wobei über eine Brennerrohreinrichtung des Schweißbrenners eine Zufuhr von Strom und Schutzgas erfolgt.

Zur Befestigung der Elektrode im Schweißbrenner ist es bekannt, die Elektrode zusammen mit einer die Elektrode zumindest teilweise umgebenden Spannhülse in die Brennerrohreinrichtung einzusetzen und mittels eines Druckstücks, welches die Spannhülse in einen in der Brennerrohreinrichtung ausgebildeten Konus presst, fest zu fixieren. Das Einsetzen der Spannhülsen in die Brennerrohreinrichtung bzw. eine Betätigung des Druckstücks erfolgt an einem hinteren Ende des Schweißbrenners. Nachteilig bei dieser Lösung ist, dass zum Wechseln der Elektrode und zum genauen Einstellen einer Elektrodenposition relativ zur Brennerrohreinrichtung bzw. einem Brennermundstücks des Schweißbrenners dieser von vorne und von hinten gut zugänglich sein muss. Weiter ist ein Zeitaufwand für eine De- und Remontage mehrerer Teile des Schweißbrenners sowie für gegebenenfalls eine genaue Festlegung einer Elektrodenposition mit einer Einstelllehre vergleichsweise groß.

Auch ist es bekannt, die Elektrode mittels einer sog. Spannzange in der Brennerrohreinrichtung zu fixieren. Die Spannzange weist ein konisches und geschlitztes Ende sowie ein gegenüberliegendes Ende mit einem Gewinde auf, wobei die Spannzange in eine passende Aufnahme in der Brennerrohreinrichtung so eingeschraubt wird, dass die Elektrode in der Spannzange fest fixiert wird. Bei dieser Lösung muss der Schweißbrenner von einer Vorderseite her zugänglich sein. Insbesondere bei automatisierten Schweißsystemen ist der Schweißbrenner in einer Arbeitsposition regelmäßig schlecht zugänglich und muss für eine Wartung bzw. einen Elektrodenwechsel erst aus seiner Halterung ausgebaut werden, damit er von vorne zugänglich ist. Eine derartige Befestigung einer Elektrode führt daher ebenfalls zu vergleichsweise großen Montage - bzw. Zeitaufwänden bei einem Elektrodenwechsel.

Weiter dient bei den bekannten Lösungen der Bereich, in dem die Elektrode eingespannt ist, nicht nur zum mechanischen Spannen und Positionieren der Elektrode sondern auch zur guten elektrischen und thermischen Kontaktierung derselben. Dies ist insofern nachteilig, als dass alle diese Funktionen bei der konstruktiven Gestaltung des Spannbereichs und bei der Auswahl einer geeigneten Einspannstelle für die Elektrode berücksichtigt werden müssen. So kann für die mechanischen, elektrischen und thermischen Anforderungen keine optimale konstruktive Lösung gefunden werden, die alle Anforderungen erfüllt.

Der vorliegenden Erfindung liegt daher die Aufgabe zugrunde, eine Elektrodenkartusche für einen Schweißbrenner, einen Schweißbrenner und ein Verfahren zum Befestigen einer Elektrode an einem Schweißbrenner vorzuschlagen, welche bzw. welches einen Elektrodenwechsel vereinfacht und eine Funktion des Schweißbrenners verbessert.

Diese Aufgabe wird durch eine Elektrodenkartusche mit den Merkmalen des Anspruchs 1, einen Schweißbrenner mit den Merkmalen des Anspruchs 12 und ein Verfahren mit den Merkmalen der Anspruchs 13 gelöst.

Bei der erfindungsgemäßen Elektrodenkartusche für einen Schweißbrenner, insbesondere für das Lichtbogen-Schutzgasschweißen mit einer nicht abschmelzenden Elektrode, ist der Schweißbrenner aus einer Brennerrohreinrichtung und der Elektrodenkartusche gebildet, wobei die Elektrodenkartusche aus einer Spannhülseneinrichtung und einer Spanneinrichtung gebildet ist, und wobei die Elektrodenkartusche so ausgebildet ist, dass eine Elektrode in die Spannhülseneinrichtung einsetzbar und an einem ersten Spannbereich der Spannhülseneinrichtung fest fixierbar ist, wobei die Elektrode durch ein Verspannen der Spannhülseneinrichtung zwischen der Spanneinrichtung und der Brennerrohreinrichtung fixierbar ist, wobei die Spanneinrichtung ein erstes und ein zweites Spannelement aufweist, wobei die Spannhülseneinrichtung einen, vom ersten Spannbereich unabhängig ausgebildeten zweiten Spannbereich aufweist, an dem die Elektrode fest fixierbar ist, und wobei die Elektrode durch ein Verspannen der Spannhülseneinrichtung zwischen dem ersten und dem zweiten Spannelement fixierbar ist.

Insbesondere durch die Ausbildung eines zweiten Spannbereichs an der Spannhülseneinrichtung und die Verwendung eines zweiten Spannelementes zum Spannen der Elektrode im zweiten Spannbereich werden die Funktionen des positionsgenauen Spannens der Elektrode sowie der elektrischen und thermischen Kontaktierung der Elektrode getrennt, so dass eine Kontaktierung und ein Spannen bzw. Befestigen der Elektrode zeitlich unabhängig voneinander ausgeführt werden kann und insbesondere ein Einstellen bzw. eine Justage der Elektrode relativ zum Schweißbrenner bzw. zu einem Mundstück der Brennerrohreinrichtung nicht in einer Zwangsposition am Brenner erfolgen muss. Vielmehr kann die Einstellung bzw. Justage der Elektrode relativ zur Elektrodenkartusche mittels Fixierung der Elektrode am zweiten Spannbereich der Spannhülseneinrichtung erfolgen, ohne dass die Elektrodenkartusche mit dem Schweißbrenner verbunden ist. Nachfolgend wird dann die Elektrodenkartusche mit der in der gewünschten Position bereits ausgerichteten Elektrode in die Brennerrohreinrichtung des Schweißbrenners eingesetzt wodurch die elektrische bzw. thermische Kontaktierung der Elektrode über den ersten Spannbereich der Spannhülseneinrichtung erfolgt. Eine Justage der Elektrode unmittelbar am Schweißbrenner ist dann nicht mehr notwendig. Insbesondere durch eine Trennung der Einspannstelle der Elektrode von der mechanischen und thermischen Kontaktierung durch den zweiten bzw. den ersten Spannbereich kann die Gestaltung der jeweiligen Spannbereiche hier konstruktiv optimal auf die jeweiligen Funktionen abgestimmt werden. Der erste Spannbereich dient dann alleine einer Strom- und Wärmeübertragung und ist vorzugsweise in der Nähe eines einem Werkstück zugewandten Elektrodenendes angeordnet.

Die Elektrodenkartusche kann in ihrer in der Brennerrohreinrichtung einzusetzenden Form an aus dem Stand der Technik bekannte und marktübliche Elektrodenkartuschen angepasst sein, derart, dass die erfindungsgemäße Elektrodenkartusche in eine Brennerrohreinrichtung nach dem Stand der Technik eingesetzt werden kann, ohne dass an der Brennerrohreinrichtung konstruktive Modifikationen notwenig währen. So können Schweißbrenner besonders einfach mit erfindungsgemäßen Elektrodenkartuschen nachgerüstet werden.

Auch ist es vorteilhaft, wenn die Elektrodenkartusche über ein hinteres Ende der Brennerrohreinrichtung in diese einsetzbar ist. So wird ein Zugang zum Schweißbrenner von einer Rückseite bzw. von hinten möglich, wobei eine Demontage eines Schweißbrenners von einer Halterung vermieden wird und so Wartungszeiten verkürzt werden. Da die Elektrode bereits in ihrer vorgesehenen Position fixiert ist, entfallen Einstellzeiten am Schweißbrenner wodurch eine Stillstandszeit einer Schweißanlage noch weiter reduziert wird.

Die Spannhülseneinrichtung kann leicht zwischen dem ersten und zweiten Spannelement verspannt werden, wenn das erste oder das zweite Spannelement sowie die Spannhülseneinrichtung jeweils einen Bund aufweisen, die zusammen einen Anschlag für die Spannhülseneinrichtung in der Spanneinrichtung ausbilden. Die Spannhülseneinrichtung kann dann formschlüssig gegenüber einem der beiden Spannelemente fixiert bzw. gegen einen derart ausgebildeten Anschlag gedrückt werden, wobei das andere Spannelement die Spannhülseneinrichtung so gegen den Anschlag drückt, dass der zweite Spannbereich zum Einspannen der Elektrode genutzt werden kann. Weiter kann der Bund als Positionierhilfe für die Spannhülseneinrichtung im Spannelement dienen, so dass sichergestellt ist, dass beim Verspannen der Spannhülseneinrichtung diese in einer definierten Position verbleibt und sich eine eingestellte Position der Elektrode beim Aktivieren des zweiten Spannbereichs nicht verändert.

Besonders vorteilhaft ist es, wenn die Spannhülseneinrichtung eine Spannhülse ist. So kann die Elektrode unmittelbar in die Spannhülse eingesetzt werden, und die Spannhülse kann weiter in das erste und/oder zweite Spannelement eingesetzt sein. Eine Spannhülse ist besonders einfach herzustellen und kann ein oder mehrteilig ausgebildet sein.

Um ein einfaches und wirkungsvolles Spannen der Elektrode zu gewährleisten, können die Spannbereiche jeweils als ein Konus mit einem Längsschlitz in der Spannhülse ausgebildet sein. Auch können eine Mehrzahl von Längsschlitzen, welche äquidistant über einen Umfang der Spannhülse angeordnet sind, an den Spannbereichen ausgebildet sein. Durch Ausbildung einer Querkraft im Bereich der Spannbereiche wird es so möglich, die Elektrode vergleichsweise großflächig zu kontaktieren bzw. zu spannen. Neben einer beschädigungsfreien Befestigung kann so auch ein guter Wärme- und Stromübergang sichergestellt werden.

Zum Spannen kann am ersten oder dem zweiten Spannelement sowie der Brennerrohreinrichtung ein jeweils mit dem Konus übereinstimmendes Gegenlager ausgebildet sein. Der jeweilige Konus kann dann mit einer Längskraft in das betreffende Gegenlager hineingepresst werden, so dass eine Querkraft auf die Spannhülse bzw. auf den jeweiligen Spannbereich ausgeübt wird. Die jeweiligen Spannbereiche können dann einfach, durch Aufbringen einer Kraft in Längsrichtung der Elektrodenkartusche aktiviert werden. Die Elektrodenkartusche kann so, unabhängig von einer Position der Spannbereiche, von einem hinteren Ende her bedient werden. Auch kann die Elektrodenkartusche mit handelsüblichen Brennerrohreinrichtungen verwendet werden, wenn ein Konus des Spannelements an ein Gegenlager der Brennerrohreinrichtung angepasst ist.

Die Spannbereiche können jeweils an Enden der Spannhülse ausgebildet sein, so dass beispielsweise der erste Spannbereich ein Ende der Elektrodenkartusche bildet, welches beim Einsetzen in die Brennerrohreinrichtung in ein Gegenlager der Brennerrohreinrichtung eingeführt wird. Der erste bzw. vordere Spannbereich der Spannhülse kann dann zur Übertragung eines Schweißstroms von der Brennerrohreinrichtung der Spannhülse und weiter zur Elektrode sowie zur Wärmeabführung von der Elektrode in die Brennerrohreinrichtung dienen. Dazu kann ein möglichst großflächiger Kontakt zwischen Spannhülse und Gegenlager der Brennerrohreinrichtung vorgesehen sein. Der erste Spannbereich kann daher vorzugsweise in Nähe einer Elektrodenspitze angeordnet sein, der zweite Spannbereich hingegen in größerer Entfernung von der Elektrodenspitze, wo genügend Platz für die benötigten Bauteile zur Verfügung steht, wenn dieser Spannbereich alleine zum mechanischen Befestigen der Elektrode im Schweißbrenner dienen soll.

Um eine Anzahl von Bauteilen der Elektrodenkartusche zu minimieren, kann das zweite Spannelement die Spannhülseneinrichtung ausbilden. Die Spannhülseneinrichtung kann dann beispielsweise an das zweite Spannelement angeformt bzw. das zweite Spannelement einstückig mit der Spannhülseneinrichtung ausgebildet sein.

Ein besonders einfacher Aufbau der Elektrodenkartusche kann ermöglicht werden, wenn das erste und das zweite Spannelement ein inneres bzw. äußeres Spannrohr ausbilden, wobei das innere Spannrohr zusammen mit der Spannhülseneinrichtung in das äußere Spannrohr einsetzbar ist. D. h. die Spannrohre können jeweils zur Übertragung einer Kraft in Längsrichtung der Elektrodenkartusche dienen, wodurch mittels eines gegenseitigen Verspannens des inneren und äußeren Spannrohrs der zweite Spannbereich der Spannhülseneinrichtung aktiviert werden kann. Das innere Spannrohr kann dann auf die Spannhülseneinrichtung, welche in das äußere Spannrohr eingesetzt wurde, eine diesbezügliche Kraft zur mechanischen Fixierung der Elektrode ausüben.

Ein Verspannen der Spannrohre kann dadurch erfolgen, dass zwischen dem inneren und dem äußeren Spannrohr sowie dem äußeren Spannrohr und der Brennerrohreinrichtung jeweils eine Gewindeverbindung ausgebildet ist. So kann durch ein Einschrauben des inneren Spannrohrs in das äußere Spannrohr eine Längskraft auf die Spannhülseneinrichtung ausgeübt werden, welche den zweiten Spannbereich zur mechanischen Fixierung der Elektrode aktiviert. Durch ein nachfolgendes Einschrauben der Elektrodenkartusche in die Brennerrohreinrichtung kann der erste Spannbereich der Spannhülseneinrichtung aktiviert werden. So ist für eine komplette Montage einer Elektrode in einem Schweißbrenner lediglich ein Verschrauben zweier Gewinde notwendig. Um eine sichere Befestigung zu gewährleisten, können die Gewinde jeweils selbstsichernde Gewinde bzw. Feingewinde sein. So wird es auch möglich, eine erforderliche Spannkraft manuell genau einzustellen.

Insbesondere für eine manuelle Handhabung kann das innere und äußere Spannrohr an der Elektrode abgewandten Enden jeweils elektrisch isolierte Griffflächen zum Verspannen der Elektrode am ersten bzw. zweiten Spannbereich aufweisen. So kann eine unerwünschte Beeinträchtigung einer Bedienperson durch einen Stromfluss oder einen Wärmeübergang vermieden werden. Die Griffflächen können für eine einfache Handhabung beispielweise in Art eines Rändelschraubenkopfs ausgebildet sein.

Der erfindungsgemäße Schweißbrenner umfasst eine Brennerrohrvorrichtung und eine erfindungsgemäße Elektrodenkartusche. Weitere vorteilhafte Ausführungsformen eines Schweißbrenners ergeben sich aus den Merkmalsbeschreibungen der auf den Vorrichtungsanspruch 1 rückbezogenen Unteransprüche.

Bei dem erfindungsgemäßen Verfahren zum Befestigen einer Elektrode an einen Schweißbrenner, insbesondere für das Lichtbogen-Schutzgasschweißen mit einer nicht abschmelzenden Elektrode, wird ein Abschnitt der Elektrode in eine Elektrodenkartusche eingesetzt und daran fest fixiert, wobei nachfolgend die Elektrodenkartusche in eine Brennerrohreinrichtung des Schweißbrenners eingesetzt und daran fest fixiert wird. Folglich erfolgt zunächst eine Fixierung der Elektrode an der Elektrodenkartusche und nachfolgend ein Einsetzten der Elektrodenkartusche in die Brennerrohreinrichtung mit einer Fixierung bzw. Befestigung an derselben. So wird es möglich, eine gewünschte Länge der Elektrode bereits vor Einsetzen in die Brennerrohreinrichtung, unabhängig und örtlich getrennt von dieser einzustellen. So kann der Abschnitt an einem zweiten Spannbereich (31) einer Spannhülseneinrichtung der Elektrodenkartusche (12) und nachfolgend an einem ersten Spannbereich (41) der Spannhülseneinrichtung fixiert werden. Hinsichtlich der sich aus diesem Verfahren ergebenden Vorteile wird auf die vorstehende Beschreibung der betreffenden Vorrichtung zur Durchführung des Verfahrens verwiesen.

Bei dem Verfahren kann insbesondere eine Länge L1 des Abschnitts der Elektrode so gewählt werden, dass die Elektrode relativ zu einem vorderen Ende der Brennerrohreinrichtung in einer definierten Länge L3 angeordnet ist. Demnach kann die Elektrode mit einer Länge L1 bzw. einem Überstand L4 in die Elektrodenkartusche eingesetzt werden, wobei sich nach einem Einsetzen der Elektrodenkartusche in die Brennerrohreinrichtung die gewünschte Einstelllänge L3 für die Elektrode relativ zu einem vorderen Ende der Brennerrohreinrichtung ergibt.

Nachfolgend wird eine bevorzugte Ausführungsform der Erfindung unter Bezugnahme auf die beigefügten Zeichnungen näher erläutert.

Es zeigen:
- **Fig. 1:**: Eine Brennerrohreinrichtung mit einer Elektrodenkartu- sche in einer Seitenansicht;
- **Fig. 2:**: die Elektrodenkartusche in einer Explosionsdarstellung in einer Seitenansicht;
- **Fig. 3:**: eine Längsschnittansicht der Elektrodenkartusche;
- **Fig. 4:**: eine Längsschnittansicht eines Schweißbrenners mit der Brennerrohreinrichtung und der Elektrodenkartusche.

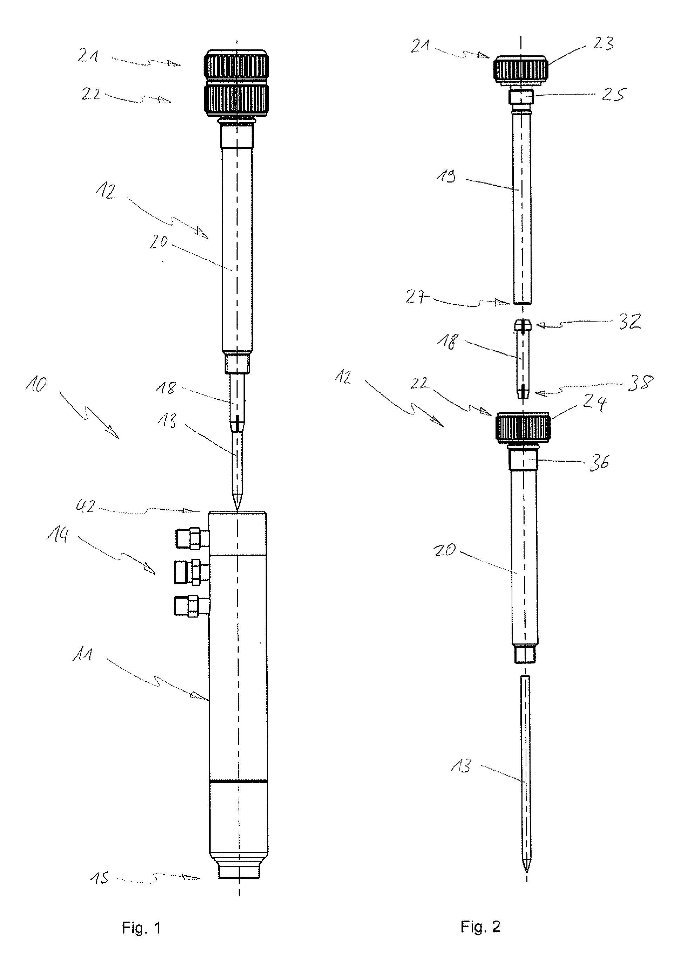

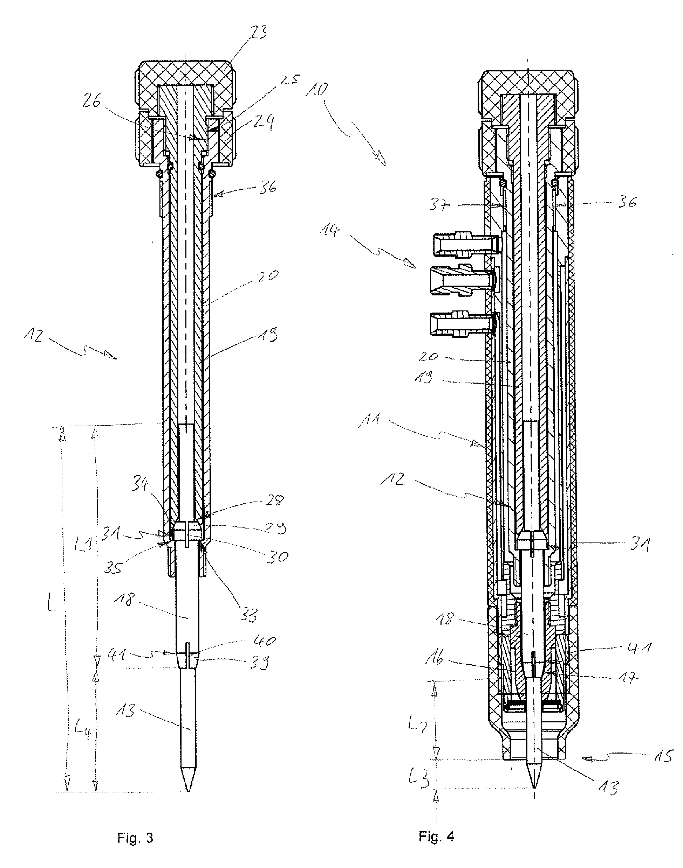

Eine Zusammenschau der **Fig. 1** bis **4** zeigt einen Schweißbrenner 10, gebildet aus einer Brennerrohreinrichtung 11 und einer Elektrodenkartusche 12 mit einer darin einsetzbaren Elektrode 13. Die Brennerrohreinrichtung 11 verfügt über Medienanschlüsse 14 zur Schutzgaszuführung und Kühlung des Schweißbrenners 10 und umfasst u.a. im Bereich eines vorderen Endes 15 einen Spitzeneinsatz 16 mit einem konischen Gegenlager 17.

Die Elektrodenkartusche 12 ist aus einer Spannhülse 18 und einem inneren Spannrohr 19 sowie einem äußeren Spannrohr 20 gebildet. Die Spannrohre 19 und 20 verfügen an ihren jeweiligen Enden 21 bzw. 22 über isolierte Griffstücke 23 bzw. 24. Weiter ist am inneren Spannrohr 19 ein Außengewinde 25 ausgebildet, welches in ein Innengewinde 26 des äußeren Spannrohrs 20 einschraubbar ist. Ein an einem vorderen Ende 27 des inneren Spannrohrs 19 ausgebildetes, konusförmiges Gegenlager 28 kann so gegen einen übereinstimmend ausgebildeten Konus 29 der Spannhülse 18 gedrückt werden. Der Konus 29 bildet zusammen mit Längsschlitzen 30 einen zweiten Spannbereich 31 an einem hinteren Ende 32 der Spannhülse 18 aus. Am hinteren Ende 32 ist weiter ein Bund 33 ausgebildet, der gegen einen Bund 34 des äußeren Spannrohrs 20 anliegt und so einen Anschlag 35 für die Spannhülse 18 im äußeren Spannrohr 20 ausbildet. Zur alleine mechanischen Befestigung der Elektrode 13 wird diese in die Spannhülse 18 bis zu einer Länge L1 eingeschoben und das innere Spannrohr 19 wird gegenüber dem äußeren Spannrohr 20 an den Griffstücken 23 bzw. 24 manuell so verschraubt, dass die Elektrode 13 im zweiten Spannbereich 31 an der Elektrodenkartusche 12 kraftschlüssig fest fixiert wird. Die Elektrode 13 überragt die Elektrodenkartusche 12 demnach um eine Länge L4, die nun fest eingestellt ist.

Am äußeren Spannrohr 20 ist weiter ein Außengewinde 36 und an der Brennerrohreinrichtung 11 ein Innengewinde 37 ausgebildet, wobei das äußere Spannrohr 20 in die Brennerrohreinrichtung 11 einschraubbar ist. An einem vorderen Ende 38 der Spannhülse 18 ist wiederum ein Konus 39 mit Längsschlitzen 40 ausgebildet, welche zusammen einen ersten Spannbereich 41 der Spannhülse 18 ausbilden. Der erste Spannbereich 41 dient im Wesentlichen einer Übertragung eines Stroms auf die Elektrode 13 und einer Abführung von Wärmeenergie in die Brennerrohreinrichtung 11. Durch ein Einschrauben der Elektrodenkartusche 12 mit der Elektrode 13 bzw. des äußeren Spannrohrs 20 in das Innengewinde 37 der Brennerrohreinrichtung 11 gelangt der Konus 39 in das Gegenlager 17, so dass auch hier eine feste, kraftschlüssige Verbindung der Elektrode 13 mit der Brennerrohreinrichtung 11 ausgebildet wird. Durch das vorherige Einstellen der Länge L4 überragt die Elektrode 13 das vordere Ende 15 der Brennerrohreinrichtung 11 nunmehr um eine Länge L3, welche der einzustellenden Länge der Elektrode 13 relativ zur Brennerrohreinrichtung 11 entspricht. Folglich setzt sich die Länge L4 aus den Längen L2 und L3 zusammen, wobei eine Gesamtlänge L der Elektrode 13 aus den Längen L1 und L4 gebildet ist.

Aus dem Vorbeschriebenem ist leicht erkennbar, dass es nunmehr nicht mehr notwendig ist, die Elektrode 13 auf die gewünschte Länge L3 am Schweißbrenner 10 einzustellen, sondern das es möglich ist, die Einstellung der Elektrode 13 unabhängig vom Schweißbrenner 10 bzw. der Brennerrohreinrichtung 11 an der Elektrodenkartusche 12 vorzunehmen. Auch ist es dann nicht mehr notwendig, dass das vordere Ende 15 der Brennerrohreinrichtung 11 zugänglich sein muss, da alle Einstell- und Montagearbeiten von einem hinteren Ende 42 der Brennerrohreinrichtung 11 ausgeführt werden können.

## Patentansprüche

1. Elektrodenkartusche (12) für einen Schweißbrenner (10), insbesondere für das Lichtbogen-Schutzgasschweißen mit einer nicht abschmelzenden Elektrode, wobei der Schweißbrenner aus einer Brennerrohreinrichtung (11) und der Elektrodenkartusche gebildet ist, wobei die Elektrodenkartusche aus einer Spannhülseneinrichtung und einer Spanneinrichtung gebildet ist, und wobei die Elektrodenkartusche so ausgebildet ist, dass eine Elektrode (13) in die Spannhülseneinrichtung einsetzbar und an einem ersten Spannbereich (41) der Spannhülseneinrichtung fest fixierbar ist, wobei die Elektrode durch ein Verspannen der Spannhülseneinrichtung zwischen der Spanneinrichtung und der Brennerrohreinrichtung fixierbar ist,
**dadurch gekennzeichnet,**
**dass** die Spanneinrichtung ein erstes und ein zweites Spannelement aufweist, wobei die Spannhülseneinrichtung einen, vom ersten Spannbereich unabhängig ausgebildeten zweiten Spannbereich (31) aufweist, an dem die Elektrode fest fixierbar ist, wobei die Elektrode durch ein Verspannen der Spannhülseneinrichtung zwischen dem ersten und dem zweiten Spannelement fixierbar ist.

2. Elektrodenkartusche nach Anspruch 1,
**dadurch gekennzeichnet,**
**dass** die Elektrodenkartusche (12) über ein hinteres Ende (42) der Brennerrohreinrichtung (11) in diese einsetzbar ist.

3. Elektrodenkartusche nach Anspruch 1 oder 2,
**dadurch gekennzeichnet,**
**dass** das erste oder das zweite Spannelement sowie die Spannhülseneinrichtung jeweils einen Bund (33; 34) aufweisen, die zusammen einen Anschlag (35) für die Spannhülseneinrichtung in der Spanneinrichtung ausbilden.

4. Elektrodenkartusche nach einem der vorangehenden Ansprüche,
**dadurch gekennzeichnet,**
**dass** die Spannhülseneinrichtung eine Spannhülse (18) ist.

5. Elektrodenkartusche nach Anspruch 4,
**dadurch gekennzeichnet,**
**dass** die Spannbereiche (31; 41) jeweils als ein Konus (29, 39) mit einem Längsschlitz (30, 40) in der Spannhülse (18) ausgebildet sind.

6. Elektrodenkartusche nach Anspruch 5,
**dadurch gekennzeichnet,**
**dass** am ersten oder dem zweiten Spannelement sowie der Brennerrohreinrichtung (11) ein jeweils mit dem Konus (29, 39) übereinstimmendes Gegenlager (17, 28) ausgebildet ist.

7. Elektrodenkartusche nach einem der Ansprüche 4 bis 6,
**dadurch gekennzeichnet,**
**dass** die Spannbereiche jeweils an Enden (32, 38) der Spannhülse (18) ausgebildet sind.

8. Elektrodenkartusche nach einem der Ansprüche 1 bis 6,
**dadurch gekennzeichnet,**
**dass** das zweite Spannelement die Spannhülseneinrichtung ausbildet.

9. Elektrodenkartusche nach einem der vorangehenden Ansprüche,
**dadurch gekennzeichnet,**
**dass** das erste und das zweite Spannelement ein inneres bzw. äußeres Spannrohr (19; 20) ausbilden, und wobei das innere Spannrohr (19) zusammen mit der Spannhülseneinrichtung in das äußere Spannrohr (20) einsetzbar ist.

10. Elektrodenkartusche nach Anspruch 9,
**dadurch gekennzeichnet,**
**dass** zwischen dem inneren und äußeren Spannrohr (19; 20) sowie dem äußeren Spannrohr (20) und der Brennerrohreinrichtung (11) jeweils eine Gewindeverbindung (25, 26, 36, 37) ausgebildet ist.

11. Elektrodenkartusche nach Anspruch 9 oder 10,
**dadurch gekennzeichnet,**
**dass** das innere und äußere Spannrohr (19; 20) an ihren der Elektrode (13) abgewandten Enden (21, 22) jeweils elektrisch isolierte Griffflächen (23, 24) zum jeweiligen Verspannen der Elektrode am ersten bzw. zweiten Spannbereich (31, 41) aufweist.

12. Schweißbrenner (10) mit einer Brennerrohreinrichtung (11) und einer Elektrodenkartusche (12) nach einem der vorangehenden Ansprüche.

13. Verfahren zum Befestigen einer Elektrode (13) an einem Schweißbrenner (10), insbesondere für das Lichtbogen-Schutzgasschweißen mit einer nicht abschmelzenden Elektrode, wobei ein Abschnitt der Elektrode in eine Elektrodenkartusche (12) eingesetzt und daran fest fixiert wird, wobei nachfolgend die Elektrodenkartusche in eine Brennerrohreinrichtung (11) des Schweißbrenners eingesetzt und daran fest fixiert wird.

14. Verfahren nach Anspruch 13,
**dadurch gekennzeichnet,**
**dass** der Abschnitt an einem zweiten Spannbereich (31) einer Spannhülseneinrichtung der Elektrodenkartusche (12) und nachfolgend an einem ersten Spannbereich (41) der Spannhülseneinrichtung fixiert wird.

15. Verfahren nach Anspruch 13 oder 14,
**dadurch gekennzeichnet,**
**dass** eine Länge (L1) des Abschnitts so gewählt wird, dass die Elektrode (13) relativ zu einem vorderen Ende (15) der Brennerrohreinrichtung (11) in einer definierten Länge (L3) angeordnet ist.
